# EUROPÄISCHE PATENTSCHRIFT

(11) **EP 1 767 385 B1**
(45) Veröffentlichungstag und Bekanntmachung des Hinweises auf die Patenterteilung: **04.11.2009**
(21) Anmeldenummer: 06019418.0
(22) Anmeldetag: 16.09.2006
(51) Int. Cl.: B60C 23/04, B60C 23/06

(54) **Verfahren zur Reifendruckkontrolle bei mehrachsigen Fahrzeugen**
Procédé de commande de la pression de pneumatique des véhicules aux plusieures axes
Method for controlling tyre pressure of multiple-axle vehicles

(30) Priorität: 23.09.2005 DE 102005045409; 29.10.2005 DE 102005051951
(43) Veröffentlichungstag der Anmeldung: 28.03.2007
(73) Patentinhaber: Beru Aktiengesellschaft, 71636 Ludwigsburg (DE)
(72) Erfinder: Schulze, Gunter, 75228 Ispringen (DE); Preis, Karl-Heinrich, 77830 Bühlertal (DE)
(74) Vertreter: Twelmeier Mommer & Partner

(56) Entgegenhaltungen:
- EP-A- 1 236 588
- DE-A1- 4 228 894
- DE-A1- 10 319 518

## Beschreibung

Die Erfindung geht von einem Verfahren mit den im Oberbegriff des Anspruchs 1 angegebenen Merkmalen aus.

Es ist bekannt, dass man bei Fahrzeugen, deren Räder mit einem Antiblockiersystem (ABS) ausgerüstet sind, aus dem ABS auch eine Information über den Reifendruck gewinnen kann. Das hängt damit zusammen, dass mit abnehmendem Reifendruck der Rollradius eines Rades abnimmt, so dass - bezogen auf eine bestimmte Geschwindigkeit - die Drehzahl des Rades mit abnehmendem Reifendruck zunimmt. Antiblockiersysteme haben an jedem Rad einen Drehzahlsensor, der die Drehzahl überwacht, um ein drohendes Blockieren des Rades rechtzeitig erkennen zu können. Antiblockiersysteme liefern also für jedes Rad ein Signal, welches dessen Drehzahl angibt. In einer Auswerteeinheit im Fahrzeug, welcher noch weitere Signale zugeführt werden, wird aus den Drehzahlsignalen auf den Rollradius und damit auf den Reifendruck des jeweiligen Rades geschlossen. Die Drehzahl eines Rades hängt aber nicht nur vom Rollradius und von der Fahrzeuggeschwindigkeit ab, sondern auch davon, ob das Fahrzeug geradeaus fährt oder ob es eine Kurve fährt. Bei Kurvenfahrt legen die kurvenäusseren Räder einen größeren Weg als die kurveninneren Räder zurück, so dass eine Differenz zwischen der Drehzahl eines rechten Rades und der Drehzahl eines auf derselben Achse angeordneten linken Rades nicht notwendigerweise durch unterschiedlichen Reifendruck oder nicht alleine durch unterschiedlichen Reifendruck verursacht ist, sondern ihre Ursache auch in einer Kurvenfahrt haben kann. Es ist deshalb bekannt, der Auswerteeinheit zusätzlich Signale eines Lenkwinkelgebers zuzuführen. Der Lenkwinkelgeber erfaßt die Drehbewegungen der Lenksäule des Fahrzeuges und meldet sie an die Auswerteeinheit. Der Kurvenradius steht in einer bekannten Beziehung zum Lenkwinkel, so dass die Auswerteeinheit aus dem Signal des Lenkwinkelgebers den Radius der Kurve berechnen kann, auf welcher sich das Fahrzeug bewegt. Daraus errechnet sich wiederum die durch die Kurvenfahrt verursachte Drehzahldifferenz zwischen einem rechten Rad und einem linken Rad auf einer gemeinsamen Achse. Korrigiert man damit die gemessene Drehzahldifferenz und ist nach Durchführen der Korrektur noch eine Drehzahldifferenz übrig, so ist diese ein Maß für eine Abweichung der Reifendrücke des rechten Rades und des linken Rades voneinander, welche, wenn sie einen Grenzwert überschreitet, dem Fahrer gemeldet wird, um ihn zu warnen.

Bei Fahrzeugen, deren Räder nicht gelenkt werden können, kann kein Lenksignal gewonnen werden, mit dessen Hilfe sich bei Kurvenfahrt eine Drehzahldifferenz zwischen einem rechten Rad und einem linken Rad korrigieren ließe. Das steht einer ABS-gestützten Reifendruckkontrolle bei Fahrzeugen entgegen, welche keine gelenkten Räder haben. Das gilt insbesondere für Nutzfahrzeug-Trailer. Bei ihnen überwacht man den Reifendruck mit Hilfe von Drucksensoren, von denen an jedem Rad einer vorgesehen ist und die den gemessenen Reifendruck während der Fahrt per Funk an einen im Fahrzeug mitgeführten Empfänger übermitteln, welcher die Drucksignale auswertet und dem Fahrer einen anomalen Druck oder eine anomale Druckentwicklung meldet. Reifendruckkontrollsysteme, welche mit Drucksensoren an den Rädern arbeiten, erlauben zwar eine genauere Drucküberwachung, sind aber leider teurer als ABS-gestützte Reifendruckkontrollsysteme.

Aus der DE 4 228 894 A1 ist ein Verfahren zur Reifendruckkontrolle gemäß dem Oberbegriff des Anspruchs 1 bekannt.

Der vorliegenden Erfindung liegt die Aufgabe zugrunde, eine Möglichkeit aufzuzeigen, bei Fahrzeugen, welche während der Fahrt keine brauchbaren Lenksignale liefern, eine Reifendruckkontrolle durchzuführen, welche weniger Aufwand erfordert als ein Reifendruckkontrollsystem, bei welchem jedes Rad mit einem eigenen Drucksensor ausgerüstet ist.

Diese Aufgabe wird gelöst durch ein Verfahren mit den im Anspruch 1 angegebenen Merkmalen. Eine zweite Lösung der gestellten Aufgabe ist Gegenstand des unabhängigen Anspruchs 2. Vorteilhafte Weiterbildungen der Erfindung sind Gegenstand der Unteransprüche.

Bei Fahrzeugen, deren Räder Luftreifen haben und mit Drehzahl-Sensoren ausgerüstet sind, welche an eine Auswerteeinheit Signale liefern, die die Drehzahl des jeweiligen Rades angeben, wird erfindungsgemäß, wie bei einem bekannten ABS-gestützten Reifendruckkontrollsystems, bei je zwei Rädern, von welchen sich eines auf der rechten Seite und eines auf der linken Seite des Fahrzeuges auf einer gemeinsamen Achse befindet, die Drehzahl der beiden Räder und deren Abweichung voneinander bestimmt. Für jedes Räderpaar wird die Drehzahlabweichung, welche sowohl von einem Druckunterschied zwischen den beiden Rädern als auch durch Kurvenfahrt verursacht sein kann, um einen Korrekturwert korrigiert, welcher den durch die Kurvenfahrt verursachten Anteil der Drehzahlabweichung zwischen dem rechten Rad und dem linken Rad angibt. Dieser Korrekturwert wird erfindungsgemäß jedoch nicht aus einem Lenksignal abgeleitet, sondern dadurch gewonnen, dass auf einer der Achsen an einem rechten Rad und an einem linken Rad zusätzlich der Reifendruck während der Fahrt gemessen und an die Auswerteeinheit übermittelt wird,
dass der Reifendruck des linken Rades mit dem Reifendruck des rechten Rades verglichen und bei Übereinstimmung eine gleichzeitig oder zeitnah bestimmte Differenz der Drehzahlen dieser beiden Räder als von einer Kurvenfahrt verursacht angenommen wird,
dass die Drehzahl des linken Rades als Erwartungswert für die Drehzahl der anderen auf der linken Fahrzeugseite angeordneten Räder ohne Drucksensor genommen wird,
dass die Drehzahl des rechten Rades als Erwartungswert für die Drehzahl der anderen auf der rechten Fahrzeugseite angeordneten Räder ohne Drucksensor genommen wird,
und dass die Drehzahl der Räder ohne Drucksensor mit dem zugehörigen Erwartungswert verglichen wird und eine Meldung an den Fahrer erfolgt, wenn die Abweichung einen Grenzwert überschreitet.

Als "zeitnah" bestimmt im Sinne der vorliegenden Erfindung wird eine Differenz der Drehzahlen dann angesehen, wenn sich der Reifendruck in dieser Zeit nur unwesentlich für das Ergebnis der Reifendruckkontrolle verändert hat.

Die Lösung nach dem nebengeordneten Anspruch 2 unterscheidet sich von der nach dem nebengeordneten Anspruch 1 darin, dass es die Differenz der Drehzahlen der beiden mit einem Drucksensor ausgerüsteten Räder ist, welche als Erwartungswert für die Differenz der Drehzahlen der anderen Räder genommen wird, welche paarweise, eines auf der rechten Seite und eines auf der linken Seite, auf jeweils einer gemeinsamen Achse angeordnet sind, und dass die Drehzahldifferenz der Räderpaare, welche keinen Drucksensor haben, mit dem Erwartungswert verglichen wird und eine Meldung an den Fahrer jedenfalls dann erfolgt, wenn die Abweichung der Drehzahldifferenz vom Erwartungswert einen Grenzwert überschreitet.

In beiden Fällen erreicht man bei einem ABS-gestützten Reifendruckkontrollsystem auch ohne Auswertung eines Lenksignals eine brauchbare Reifendruckkontrolle bereits durch den Einsatz von nur zwei Drucksensoren an einem Fahrzeug, welches mindestens vier zu überwachende Räder hat. Ein typischer Trailer ist mit drei ungelenkten Achsen mit je zwei Rädern ausgerüstet. Verglichen mit einem herkömmlichen Reifendruckkontrollsystem, welches für einen solchen Trailer sechs Reifendrucksensoren mit der zugehörigen Stromversorgung, Steuerung, Sender und Sendeantenne benötigen würde, benötigt man erfindungsgemäß nur zwei Reifendrucksensoren. Bei Trailern und anderen Fahrzeugen mit mehr als drei ungelenkten Achsen und unter Umständen noch mit Zwillingsbereifung ist der Kostenvorteil für die Erfindung noch größer. Die Erfindung bildet eine sehr preiswerte Verbesserung eines ABS-gestützten Reifendruckkontrollsystems und macht ein solches für Fahrzeuge, die keine gelenkten Achsen oder Räder haben, überhaupt erst einsatzfähig.

Bei der Lösung nach Anspruch 1 können die Räder auf der rechten Fahrzeugseite hinsichtlich ihres Rollradius mit dem einen Rad auf der rechten Seite, welches einen Drucksensor hat, verglichen werden. In gleicher Weise können die Räder auf der linken Seite des Fahrzeuges hinsichtlich ihres Rollradius mit dem einen Rad auf der linken Fahrzeugseite verglichen werden, welches einen Drucksensor hat. Die für die Räder gelieferten Drehzahlen werden mit Hilfe der Drehzahldifferenz, die die beiden mit einem Drucksensor ausgerüsteten Räder bei übereinstimmendem Reifendruck haben, für Anteile, die von einer Kurvenfahrt verursacht sind, kompensiert, so dass man einen Druckvergleich der Räder auf der rechten Seite untereinander und der Räder auf der linken Seite untereinander durchführen und bei Abweichungen, die einen Grenzwert unterschreiten, eine Meldung an den Fahrer vornehmen kann. Die Meldung kann unterschiedliche Inhalte haben. Es kann sich um eine einfache Warnung für ein bestimmtes Rad handeln, die nur das Überschreiten des Grenzwertes anzeigt, z.B. das Aufleuchten der Position des Rades auf einem Display. Es kann auch eine Textmeldung erfolgen, die das Rad bezeichnet und das Ausmaß der Druckabweichung angibt. Die Meldung kann auch eine Aufforderung sein, bei nächster Gelegenheit anzuhalten und den Luftdruck zu korrigieren oder - bei einer gefährlichen Druckabweichung - sofort anzuhalten und den Reifendruck zu korrigieren.

Bei der Lösung gemäß Anspruch 2 wird der Fahrer gewarnt, wenn die Druckdifferenz zwischen einem Rad auf der rechten Seite und einem Rad auf der linken Seite derselben Achse einen Grenzwert überschreitet. Das beruht auf der Überlegung, dass sich ein Druckabfall, insbesondere ein gefährlicher Druckabfall, in den beiden Rädern auf einer gemeinsamen Achse im Regelfall nicht in gleicher Weise und nicht in gleichem Ausmaß entwickelt.

Vorzugsweise wird die erfindungsgemäß bestimmte Drehzahlabweichung auf eine Bezugsdrehzahl normiert, insbesondere auf die Drehzahl des rechten Rades oder auf die Drehzahl des linken Rades oder auf deren Mittelwert. Das hat den Vorteil, dass dann der Reifenverschleiß und die Fahrgeschwindigkeit auf die Reifendruckkontrolle einen besonders geringen Einfluß haben.

Um mit Hilfe der Drucksensoren den von einer Kurvenfahrt verursachten Anteil in einer gemessenen Drehzahl oder in einer gemessenen Drehzahldifferenz zu bestimmen, braucht man in den Reifen der beiden Räder, welche mit den Drucksensoren ausgerüstet sind, übereinstimmende Reifendrücke. In vorteilhafter Weiterbildung der Erfindung wird der Fahrer deshalb aufgefordert, den Reifendruck in den beiden durch Drucksensoren überwachten Reifen gleich hoch einzustellen, wenn die mit den Drucksensoren gemessenen Drücke nicht übereinstimmen. Andernfalls müßte der Fahrer den Druck regelmäßig manuell kontrollieren. Eine regelmäßige, vorsorgliche manuelle Kontrolle kann jedoch durch die Aufforderung, den Reifendruck übereinstimmend und vorschriftsmäßig einzustellen, wenn die gemessenen Drücke nicht übereinstimmen, überflüssig werden.

Exakt übereinstimmende Reifendrücke wird man selten vorfinden. In vorteilhafter Weiterbildung der Erfindung ist deshalb vorgesehen, dass die von den beiden Drucksensoren gemeldeten Drücke als miteinander übereinstimmend angesehen werden, solange ihr Unterschied kleiner als eine vorgewählte Druckdifferenzschwelle ist. Die Druckdifferenzschwelle wird so gewählt, dass die durch ihre Wahl in Kauf zu nehmende Ungenauigkeit in der Reifendruckkontrolle noch hinnehmbar ist. Vorzugsweise wird die Druckdifferenzschwelle, bis zu welcher die gemeldeten Drücke als übereinstimmend angesehen werden, zu 5 % bis 10 % des vom Fahrzeughersteller empfohlenen oder vorgeschriebenen Reifensolldrucks gewählt. Für Nutzfahrzeuge wird die Druckdifferenzschwelle, bis zu welcher die gemeldeten Drücke als miteinander übereinstimmend angesehen werden, vorzugsweise zu 0,4 bar gewählt.

Werden an den Rädern, die mit einem Drucksensor ausgerüstet sind, Abweichungen vom Reifensolldruck gemessen, können die Abweichungen herangezogen werden, um den Erwartungswert der Drehzahl der nicht mit einem Drucksensor versehenen Räder anzupassen. Ist der in einem Rad gemessene Druck kleiner als der Reifensolldruck, dann dreht sich dieses Rad schneller als beim Vorliegen des Reifensolldrucks und für die anderen Räder auf derselben Fahrzeugseite würde eine entsprechend höhere Drehzahl erwartet. Indem die erwartete Drehzahl nun entsprechend der gemessenen Druckabweichung nach unten korrigiert wird, wird eine genauere Drucküberwachung für die Räder ohne Drucksensor erreicht. Wird in einem der mit einem Drucksensor ausgerüsteten Räder jedoch ein über dem Reifensolldruck liegender Reifendruck gemessen, dann ergibt sich wegen des erhöhten Rollradius ein zu geringer Erwartungswert für die Drehzahl, so daß man ihn vorzugsweise entsprechend der gemessenen Abweichung vom Reifensolldruck nach oben korrigiert.

Wenn der Fahrer informiert wird, dass die an die Auswerteeinheit gemeldeten Reifendrücke bei den Rädern, die mit einem Drucksensor ausgerüstet sind, zwar miteinander übereinstimmen, aber von dem vom Fahrzeughersteller empfohlenen oder vorgeschriebenen Reifensolldruck abweichen, dann gibt es unterschiedliche Möglichkeiten, weiter zu verfahren. Ist die Abweichung der Reifendrücke vom Reifensolldruck nicht so gravierend, dass eine rasche Richtigstellung des Reifendrucks erforderlich ist, dann kann man bei der Bewertung der gemessenen Drehzahlen so tun, als ob die Reifendrucksensoren den Reifensolldruck gemeldet hätten. Die Folge davon ist eine Verschiebung der Warngrenzen; möglicherweise wird der Fahrer erst bei einer größeren Reifendruckabweichung gewarnt, als wenn in den mit Reifendrucksensoren überwachten Reifen tatsächlich der Solldruck geherrscht hätte. Es ist aber auch möglich, den Grenzwert, bei dessen Überschreiten der Fahrer gewarnt werden soll, in Abhängigkeit von der Abweichung des gemessenen Reifendrucks vom Reifensolldruck anzupassen, insbesondere proportional zur relativen Abweichung des gemeldeten Reifendrucks vom Reifensolldruck. Dadurch können die ursprünglich vorgesehenen Warngrenzen beibehalten werden. In jedem Fall empfiehlt es sich, den Fahrer aufzufordern, bei nächster Gelegenheit die beiden mit Drucksensoren versehenen Reifen wieder auf ihren Solldruck zu bringen und dadurch die korrekte Basis für die Bewertung der gemessenen Drehzahlen wieder herzustellen.

Melden die beiden Drucksensoren unterschiedliche Reifendrücke und ist der Unterschied größer als die vorgewählte Druckdifferenzschwelle, bis zu welcher die Drücke vorzugsweise noch als miteinander übereinstimmend angesehen werden, dann kann die Drehzahldifferenz, die für die mit Drucksensoren ausgerüsteten Räder bestimmt wird, nicht als Erwartungswert für die anderen, nicht mit Drucksensoren ausgerüsteten Räder genutzt werden. In diesem Fall soll dem Fahrer das Überschreiten der Druckdifferenzschwelle gemeldet werden und er soll aufgefordert werden, möglichst bald an diesen beiden Rädern wieder den Solldruck einzustellen, um die volle Funktionsfähigkeit des Reifendruckkontrollsystems wieder herzustellen.

Bei Fahrzeugen mit mehr als zwei ungelenkten Achsen sollten die beiden Drucksensoren auf einer mittleren Achse angeordnet werden, auf welcher bei Kurvenfahrt die Radien, auf welchen sich das rechte bzw. das linke Rad bewegen, am nächsten bei den Radien liegen, auf welchen sich die anderen Räder auf der rechten Seite bzw. auf der linken Seite des Fahrzeuges bewegen.

## Patentansprüche

1. Verfahren zur Reifendruckkontrolle bei mehrachsigen Fahrzeugen, deren Räder Luftreifen haben und mit Drehzahl-Sensoren ausgerüstet sind, welche an eine Auswerteeinheit Signale liefern, welche die Drehzahl des jeweiligen Rades angeben, durch
(a) gleichzeitiges Bestimmen der Drehzahl eines rechten Rades und eines linken Rades, welche sich auf einer gemeinsamen Achse befinden,
(b) Bestimmen der Abweichung der beiden Drehzahlen voneinander,
(c) Vermindern der Drehzahlabweichung um einen Korrekturwert, welcher bei einer Kurvenfahrt den durch die Kurvenfahrt verursachten Anteil der Drehzahlabweichung zwischen dem rechten und dem linken Rad angibt, und
(d) Anzeigen der korrigierten Drehzahlabweichung oder eines davon abgeleiteten Signals wenigstens dann, wenn die korrigierte Drehzahlabweichung einen Grenzwert überschreitet,
**dadurch gekennzeichnet,**
**dass** an einem rechten Rad und an einem linken Rad auf einer der Achsen zusätzlich der Reifendruck während der Fahrt gemessen und an die Auswerteeinheit übermittelt wird,
**dass** der Reifendruck des linken Rades mit dem Reifendruck des rechten Rades verglichen und bei Übereinstimmung eine gleichzeitig oder zeitnah bestimmte Differenz der Drehzahlen dieser beiden Räder als von einer Kurvenfahrt verursacht angenommen wird,
**dass** die Drehzahl des linken Rades als Erwartungswert für die Drehzahl der anderen auf der linken Fahrzeugseite angeordneten Räder ohne Drucksensor genommen wird,
**dass** die Drehzahl des rechten Rades als Erwartungswert für die Drehzahl der anderen auf der rechten Fahrzeugseite angeordneten Räder ohne Drucksensor genommen wird,
und **dass** die Drehzahl der Räder ohne Drucksensor mit dem zugehörigen Erwartungswert verglichen wird und eine Meldung an den Fahrer erfolgt, wenn die Abweichung einen Grenzwert überschreitet.

2. Verfahren zur Reifendruckkontrolle bei mehrachsigen Fahrzeugen, deren Räder Luftreifen haben und mit Drehzahl-Sensoren ausgerüstet sind, welche an eine Auswerteeinheit Signale liefern, welche die Drehzahl des jeweiligen Rades angeben, durch
(a) gleichzeitiges Bestimmen der Drehzahl eines rechten Rades und eines linken Rades, welche sich auf einer gemeinsamen Achse befinden,
(b) Bestimmen der Abweichung der beiden Drehzahlen voneinander,
(c) Vermindern der Drehzahlabweichung um einen Korrekturwert, welcher bei einer Kurvenfahrt den durch die Kurvenfahrt verursachten Anteil der Drehzahlabweichung zwischen dem rechten und dem linken Rad angibt, und
(d) Anzeigen der korrigierten Drehzahlabweichung oder eines davon abgeleiteten Signals wenigstens dann, wenn die korrigierte Drehzahlabweichung einen Grenzwert überschreitet,
**dadurch gekennzeichnet,**
**dass** an einem rechten Rad und an einem linken Rad auf einer der Achsen zusätzlich der Reifendruck während der Fahrt gemessen und an die Auswerteeinheit übermittelt wird,
**dass** der Reifendruck des linken Rades mit dem Reifendruck des rechten Rades verglichen und bei Übereinstimmung eine gleichzeitig oder zeitnah bestimmte Differenz der Drehzahlen dieser beiden Räder als von einer Kurvenfahrt verursacht angenommen und als Erwartungswert für die die Differenz der Drehzahlen der anderen, aus je einem linken und einem rechten Rad, welche keinen Drucksensor haben und auf einer gemeinsamen Achse angeordnet sind, gebildeten Paare genommen wird,
und **dass** die Drehzahldifferenz der Räderpaare ohne Drucksensor mit dem Erwartungswert verglichen wird und eine Meldung an den Fahrer erfolgt, wenn die Abweichung der Drehzahldifferenz vom Erwartungswert einen Grenzwert überschreitet.

3. Verfahren nach Anspruch 1 oder 2, **dadurch gekennzeichnet, dass** die Drehzahlabweichung auf eine Bezugsdrehzahl normiert wird.

4. Verfahren nach Anspruch 3, **dadurch gekennzeichnet, dass** als Bezugsdrehzahl entweder die Drehzahl des rechten Rades oder die Drehzahl des auf derselben Achse befindlichen linken Rades oder deren Mittelwert gewählt wird.

5. Verfahren nach einem der vorstehenden Ansprüche, **dadurch gekennzeichnet, dass** der Fahrer aufgefordert wird, den Reifendruck in den beiden durch Drucksensoren überwachten Reifen gleich hoch einzustellen, wenn die gemessenen Drücke nicht übereinstimmen.

6. Verfahren nach einem der vorstehenden Ansprüche, **dadurch gekennzeichnet, dass** die von den beiden Drucksensoren gemeldeten Drücke als miteinander übereinstimmend angesehen werden, solange ihr Unterschied kleiner als eine vorgewählte Druckdifferenzschwelle ist.

7. Verfahren nach Anspruch 6, **dadurch gekennzeichnet, dass** die Druckdifferenzschwelle, bis zu welcher die gemeldeten Drücke als übereinstimmend angesehen werden, zu 5 % bis 10 % des vom Fahrzeughersteller empfohlenen oder vorgeschriebenen Reifensolldrucks gewählt wird.

8. Verfahren nach Anspruch 6 oder 7, **dadurch gekennzeichnet, dass** die Druckdifferenzschwelle, bis zu welcher die gemeldeten Drücke als miteinander übereinstimmend angesehen werden, für Nutzfahrzeuge zu 0,4 bar gewählt wird.

9. Verfahren nach einem der vorstehenden Ansprüche, **dadurch gekennzeichnet, dass** eine Meldung an den Fahrer erfolgt, wenn die an die Auswerteeinheit gemeldeten Drücke zwar miteinander übereinstimmen, aber von dem vom Fahrzeughersteller empfohlenen oder vorgeschriebenen Reifensolldruck abweichen.

10. Verfahren nach einem der vorstehenden Ansprüche, **dadurch gekennzeichnet, dass** eine Anpassung des Grenzwertes vorgenommen wird, wenn die an die Auswerteeinheit gemeldeten Drücke zwar miteinander übereinstimmen, aber von dem vom Fahrzeughersteller empfohlenen oder vorgeschriebenen Reifensolldruck abweichen.

11. Verfahren nach Anspruch 10, **dadurch gekennzeichnet, dass** der Grenzwert proportional zur relativen Abweichung des gemeldeten Reifendrucks vom Reifensolldruck angepaßt wird.

12. Verfahren nach einem der vorstehenden Ansprüche, **dadurch gekennzeichnet, dass** bei Fahrzeugen mit mehr als zwei Achsen die Drucksensoren an Rädern auf einer mittleren Achse angeordnet werden.

13. Verfahren nach einem der vorstehenden Ansprüche, **dadurch gekennzeichnet, dass** der Erwartungswert der Drehzahl bzw. der Drehzahldifferenz angepaßt wird, wenn in einem der mit einem Druckmesser ausgerüsteten Räder eine Abweichung vom Reifensolldruck gemessen wird.

## Claims

1. Method for controlling the tire pressure in multiple-axle vehicles whose wheels are equipped with pneumatic tires and speed sensors that supply an evaluation unit with signals indicative of the speed of the respective wheel, by
(a) determining simultaneously the speed of a right-hand wheel and of a left-hand wheel mounted on a common axle,
(b) determining the deviation between the two speeds,
(c) reducing the deviation in speed by a correction value representative, during a cornering motion, of that component of the deviation in speed between the right-hand wheel and the left-hand wheel which is due to the cornering motion, and
(d) indicating the corrected deviation in speed, or of a signal derived therefrom, at least when the corrected deviation in speed exceeds a given threshold value,
**characterized in that**
the tire pressure of a right-hand wheel and of a left-hand wheel on one of the axles is additionally measured, and transmitted to the evaluation unit, during motion,
that the tire pressure of the right-hand wheel is compared with the tire pressure of the left-hand wheel and, if the two values correspond one to the other, any difference between the speeds of the two wheels, determined at the same time or at a near point in time, is regarded as being due to a cornering motion,
that the speed of the left-hand wheel is taken as an expectation value of the speed of the other wheels, having no pressure sensors, on the left-hand side of the vehicle,
that the speed of the right-hand wheel is taken as an expectation value of the speed of the other wheels, having no pressure sensors, on the right-hand side of the vehicle, and
that the speed of the wheels, having no pressure sensors, is compared with the relevant expectation value, and the driver is warned when the deviation exceeds a given threshold value.

2. Method for controlling the tire pressure in multiple-axle vehicles whose wheels are equipped with pneumatic tires and speed sensors that supply an evaluation unit with signals indicative of the speed of the respective wheel, by
(a) determining simultaneously the speed of a right-hand wheel and of a left-hand wheel mounted on a common axle,
(b) determining the deviation between the two speeds,
(c) reducing the deviation in speed by a correction value representative, during a cornering motion, of that component of the deviation in speed between the right-hand wheel and the left-hand wheel which is due to the cornering motion, and
(d) indicating the corrected deviation in speed, or of a signal derived therefrom, at least when the corrected deviation in speed exceeds a given threshold value,
**characterized in that**
the tire pressure of a right-hand wheel and of a left-hand wheel on one of the axles is additionally measured, and transmitted to the evaluation unit, during motion,
that the tire pressure of the left-hand wheel is compared with the tire pressure of the right-hand wheel and, if the two values correspond one to the other, a difference in speeds between those two wheels, determined simultaneously or at a near point in time one relative to the other, is taken as an expectation value for the difference in speed of the other pairs, consisting each of one left-hand and one right-hand wheel, having no pressure sensor and arranged on a common axle, and
that the difference in speed between the pair of wheels, having no pressure sensors, is compared with the expectation value and the driver is warned when the deviation between the speed difference and the evaluation value exceeds a given threshold value.

3. The method as defined in Claim 1 or Claim 2, **characterized in that** the deviation in speed is normalized at a reference speed.

4. The method as defined in Claim 3, **characterized in that** either the speed of the right-hand wheel or the speed of the left-hand wheel mounted on the same axle, or the mean value of the two speeds, is taken as a reference value.

5. The method as defined in any of the preceding claims, **characterized in that** the driver is requested to adjust the tire pressure of the two tires, being monitored by pressure sensors, to an equal value if the pressure values measured do not correspond one to the other.

6. The method as defined in any of the preceding claims, **characterized in that** the pressure values supplied by the two pressure sensors are regarded to correspond one to the other as long as the difference between them remains below a predetermined pressure difference threshold value.

7. The method as defined in Claim 6, **characterized in that** the pressure difference threshold value, up to which the pressure values supplied will be regarded as corresponding one to the other, is selected to be 5 % up to 10 % of the nominal tire pressure recommended or prescribed by the vehicle manufacturer.

8. The method as defined in Claim 6 or Claim 7, **characterized in that** the tire pressure threshold value up to which the signaled pressure values are regarded as corresponding one to the other, is selected to be 0.4 bar for commercial vehicles.

9. The method as defined in any of the preceding claims, **characterized in that** the driver is informed, when the tire pressure values signaled to the evaluation unit correspond one to the other, but deviate from the nominal tire pressure recommended or prescribed by the vehicle manufacturer.

10. The method as defined in any of the preceding claims, **characterized in that** the threshold value is adapted when the tire pressure values signaled to the evaluation unit correspond one to the other, but deviate from the nominal tire pressure recommended or prescribed by the vehicle manufacturer.

11. The method as defined in Claim 10, **characterized in that** the threshold value is adapted in proportion to the relative deviation of the signaled tire pressure from the nominal tire pressure.

12. The method as defined in any of the preceding claims, **characterized in that** in the case of vehicles having more than two axles the pressure sensors are placed on wheels mounted on a middle axle.

13. The method as defined in any of the preceding claims, **characterized in that** the expectation value of the speed, or of the speed difference, is adapted when a deviation from the tire pressure is measured in any of the wheels equipped with a pressure sensor.

## Revendications

1. Procédé pour le contrôle de la pression de pneumatiques sur des véhicules à plusieurs essieux, dont les roues possèdent des bandages pneumatiques et sont équipées de capteurs de la vitesse de rotation qui envoient des signaux à une unité d'évaluation, les signaux indiquant la vitesse de rotation de la roue respective, par
(a) détermination simultanée de la vitesse de rotation d'une roue droite et d'une roue gauche qui se trouvent sur un essieu commun ;
(b) détermination de l'écart entre les deux vitesses de rotation ;
(c) diminution de l'écart entre les vitesses de rotation d'une valeur correspondant à une valeur de correction qui indique, lors de la négociation d'un virage, la fraction de l'écart entre les vitesses de rotation de la roue droite et de la roue gauche, due à la négociation du virage ; et
(d) affichage de l'écart corrigé entre les deux vitesses de rotation ou de signal qui en dérive, au moins lorsque le l'écart corrigé entre les deux vitesses de rotation dépasse une valeur limite ;
**caractérisé**
**en ce qu'**on mesure en outre, sur une roue droite et sur une roue gauche sur un des essieux, la pression du pneumatique au cours du déplacement, ladite pression étant transmise à l'unité d'évaluation ;
**en ce qu'**on compare la pression du pneumatique de la roue gauche à la pression du pneumatique de la roue droite et, en cas de concordance, on considère une différence entre les vitesses de rotation de ces deux roues, déterminée de manière simultanée ou proche dans le temps, comme étant due à la négociation d'un virage ;
**en ce qu'**on enregistre la vitesse de rotation de la roue gauche à titre de valeur d'espérance pour la vitesse de rotation de l'autre roue disposée du côté gauche du véhicule, en l'absence de capteur de pression ;
**en ce qu'**on enregistre la vitesse de rotation de la roue droite à titre de valeur d'espérance pour la vitesse de rotation de l'autre roue disposée du côté droit du véhicule, en l'absence de capteur de pression ;
et **en ce qu'**on compare la vitesse de rotation des roues, en l'absence de capteur de pression, à la valeur d'espérance correspondante, le conducteur étant averti lorsque l'écart dépasse une valeur limite.

2. Procédé pour le contrôle de la pression de pneumatiques sur des véhicules à plusieurs essieux, dont les roues possèdent des bandages pneumatiques et sont équipées de capteurs de la vitesse de rotation qui envoient des signaux à une unité d'évaluation, les signaux indiquant la vitesse de rotation de la roue respective, par
(a) détermination simultanée de la vitesse de rotation d'une roue droite et d'une roue gauche qui se trouvent sur un essieu commun ;
(b) détermination de l'écart entre les deux vitesses de rotation ;
(c) diminution de l'écart entre les vitesses de rotation d'une valeur correspondant à une valeur de correction qui indique, lors de la négociation d'un virage, la fraction de l'écart entre les vitesses de rotation de la roue droite et de la roue gauche, due à la négociation du virage ; et
(d) affichage de l'écart corrigé entre les deux vitesses de rotation ou de signal qui en dérive, au moins lorsque l'écart corrigé entre les deux vitesses de rotation dépasse une valeur limite ;
**caractérisé**
**en ce qu'**on mesure en outre, sur une roue droite et sur une roue gauche sur un des essieux, la pression du pneumatique au cours du déplacement, ladite pression étant transmise à l'unité d'évaluation ;
**en ce qu'**on compare la pression du pneumatique de la roue gauche à la pression du pneumatique de la roue droite et, en cas de concordance, on considère une différence entre les vitesses de rotation de ces deux roues, déterminée de manière simultanée ou proche dans le temps, comme étant due à la négociation d'un virage et on la prend comme valeur d'espérance pour la différence de vitesse de rotation de l'autre paire formée par respectivement une roue gauche et une roue droite qui ne possèdent pas de capteur de pression et qui sont disposées sur un essieu commun ;
et **en ce qu'**on compare la vitesse de rotation des paires de roues, en l'absence de capteur de pression, à la valeur d'espérance, le conducteur étant averti lorsque l'écart entre la différence des vitesses de rotation et la valeur d'espérance dépasse une valeur limite.

3. Procédé selon la revendication 1 ou 2, **caractérisé en ce que** l'écart entre les vitesses de rotation est normalisé par rapport à une vitesse de rotation de référence.

4. Procédé selon la revendication 3, **caractérisé en ce qu'**on sélectionne, pour faire office de vitesse de rotation de référence, soit la vitesse de rotation de la roue droite, soit la vitesse de rotation de la roue gauche se trouvant sur le même essieu, ou bien leur valeur moyenne.

5. Procédé selon l'une quelconque des revendications précédentes, **caractérisé en ce que** le conducteur est prié de régler à la même valeur la pression de pneumatique dans les deux bandages pneumatiques surveillés par les capteurs de pression, lorsque les pressions mesurées ne concordent pas.

6. Procédé selon l'une quelconque des revendications précédentes, **caractérisé en ce que** les pressions communiquées par les deux capteurs de pression sont considérées comme étant réciproquement concordantes tant que la différence est inférieure à un seuil de différence de pression sélectionné.

7. Procédé selon la revendication 6, **caractérisé en ce qu'**on sélectionne le seuil de différence de pression, jusqu'auquel on considère les pressions renseignées comme étant réciproquement concordantes, de telle sorte qu'il corresponde à une valeur représentant de 5 % à 10 % de la pression de consigne de pneumatique recommandée ou prescrite par le constructeur automobile.

8. Procédé selon la revendication 6 ou 7, **caractérisé en ce qu'**on sélectionne le seuil de différence de pression, jusqu'auquel on considère les pressions renseignées comme étant réciproquement concordantes, à une valeur de 0,4 bar pour des véhicules utilitaires.

9. Procédé selon l'une quelconque des revendications précédentes, **caractérisé en ce que** le conducteur est averti lorsque les pressions communiquées à l'unité d'évaluation sont, il est vrai, réciproquement concordantes, mais s'écartent de la pression de consigne de pneumatique recommandée ou prescrite par le constructeur automobile.

10. Procédé selon l'une quelconque des revendications précédentes, **caractérisé en ce que** l'on procède à une adaptation de la valeur limite lorsque les pressions communiquées à l'unité d'évaluation sont il est vrai réciproquement concordantes, mais s'écartent de la pression de consigne de pneumatique recommandée ou prescrite par le constructeur automobile.

11. Procédé selon la revendication 10, **caractérisé en ce que** la valeur limite fait l'objet d'une adaptation proportionnelle à l'écart relatif entre la pression de pneumatique communiquée et la pression de consigne de pneumatique.

12. Procédé selon l'une quelconque des revendications précédentes, **caractérisé en ce que**, dans le cas de véhicules comportant plus de deux essieux, les capteurs de pression sont disposés sur des roues situées sur un essieu médian.

13. Procédé selon l'une quelconque des revendications précédentes, **caractérisé en ce que** la valeur d'espérance est adaptée à la vitesse de rotation, respectivement à la différence entre les vitesses de rotation lorsqu'on mesure, dans une des roues équipées d'une capteur de pression, un écart par rapport à la pression de consigne de pneumatique.
